# EUROPEAN PATENT APPLICATION

(11) **EP 2 009 257 A1**
(43) Date of publication of application: **31.12.2008**
(21) Application number: 08158849.3
(22) Date of filing: 24.06.2008
(51) Int. Cl.: F01N 3/00

(54) **Exhaust Emission Control System And Engine-Driven Air Conditioning System**

(30) Priority: 25.06.2007 JP 2007166461
(71) Applicant: Aisin Seiki Kabushiki Kaisha, Kariya-shi, Aichi 448-8650 (JP)
(72) Inventor: Asao, Satoru, Kariya-shi Aichi 448-8650 (JP)
(74) Representative: Winter, Brandl, Fürniss, Hübner Röss, Kaiser, Polte Partnerschaft Patent- und Rechtsanwaltskanzlei

(57) **Abstract**

An exhaust emission control system includes a vapor-liquid separating portion (300) including a separating portion main body (310) separating an exhaust gas into a vapor phase emission and a liquid phase emission, and a liquid phase outlet (350) discharging the separated liquid phase emission, an exhaust passage (400) connecting the engine and the separating portion main body (310) and supplying the exhaust gas emitted from the engine to the separating portion main body (310), an emitted liquid purge-processing portion (500) provided to be in fluid communication with the liquid phase outlet (350) and processing with purge to the liquid phase emission emitted from the liquid phase outlet (350), and a vapor suction means (600, 600B, 600C, 352, 570, 570C, 570D, 650) sucking the vapor existing in a space within the emitted liquid purge-processing portion (500) to be supplied to the separating portion main body (310) of the vapor-liquid separating portion (300).

## Description

### FIELD OF THE INVENTION

The present invention relates to an exhaust emission control system and engine-driven air conditioning system.

### BACKGROUND

A known engine-driven air conditioning system includes a compressor which compresses or sucks refrigerants in order to execute refrigeration cycle at an air-conditioning circuit, and an engine which drives the compressor. The known air conditioning system includes a vapor-liquid separating system which separates exhaust gases into a vapor phase and a liquid phase. The vapor-liquid separating system includes an exhaust passage in which the exhaust gas exhausted from the engine flows and a vapor-liquid separating portion connected to the exhaust passage, and an liquid emission purging portion which receives liquid phase emissions separated from vapor phase emissions at the vapor-liquid separating portion via a liquid-phase outlet. The vapor-liquid separating portion separates the vapor phase and the liquid phase included in the exhaust gases emitted from an exhaust pipe. The liquid phase separated from the emission gas flows into the liquid emission purging portion via the liquid phase outlet, and thereby purified in the liquid emission purging portion. According to the known engine-driven air conditioning system, the purification, or purge of the liquid emission is performed as described above.

As a known liquid emission purging portion applied in the engine driven air conditioning system, a processing unit of drain water is disclosed in JP7-259549A. According to the processing unit of drain water disclosed in JP7-259549A, a container, which accommodates neutralizer neutralizing drain water to be neutralized and purged, is provided at a path for emission gases, thereby introducing drain water into the container via a drain water inlet port so as to neutralize the drain water to be neutralized, thus to be purged. Another known liquid emission purging portion applied in the engine driven air conditioning system disclosed in JP2000-213341A includes a drain neutralization container which accommodates neutralizer neutralizing drain water introduced from a drain inlet, and forms a water sealing mechanism by plural dividers arranged inside the drain neutralization container. According to the construction disclosed in JP2000-213341A, emission of exhaust gases which are retained in the drain neutralization container to the outside is restrained.

Notwithstanding, according to the construction disclosed in JP7-259549A, the exhaust gas residual in the space of processing unit of drain water may leak outside. This is because there is a limit to sealing performance of the processing unit of drain water. In those circumstances, there is a possibility that leaked exhaust gas is condensed outside the processing unit of drain water to generate condensate water. The condensate water condensed outside the processing unit of drain water explained above may be unprocessed with purging process by the processing unit of drain water or may be unlikely processed with purge by the processing unit of drain water. Accordingly, there is a possibility that water which is not adequately neutralized and purged is emitted to the outside.

According to the construction disclosed in JP2000-213341A, as described above, the water sealing mechanism having the plural dividers is formed inside the processing unit of drain water. With the construction disclosed in JP2000-213341A, emissions of the exhaust gas which is residual in the drain neutralization container to the outside is restrained by the sealing performance of the water sealing mechanism. However, under the conditions where the generation of the drain water is reduced (e.g., in the summer, in the hot weather), there is a limit to enhancing sealing performance of the water sealing mechanism, thus there is a limit to ensuring the complete liquid emission purging processing.

A need thus exists for an exhaust emission control system and an engine-driven air conditioning system which is advantageous for ensuring purging processing of liquid emissions.

### SUMMARY OF THE INVENTION

In light of the foregoing, the present invention provides an exhaust emission control system, which includes a vapor-liquid separating portion including a separating portion main body separating an exhaust gas emitted from an engine into a vapor phase emission and a liquid phase emission, and a liquid phase outlet discharging the liquid phase emission separated at the separating portion main body, an exhaust passage connecting the engine and the separating portion main body of the vapor-liquid separating portion and supplying the exhaust gas emitted from the engine to the separating portion main body of the vapor-liquid separating portion, an emitted liquid purge-processing portion provided to be in fluid communication with the liquid phase outlet and processing with purge to the liquid phase emission emitted from the liquid phase outlet, and a vapor suction means sucking the vapor existing in a space within the emitted liquid purge-processing portion to be supplied to the separating portion main body of the vapor-liquid separating portion.

According to another aspect of the exhaust emission control system of the present invention, the vapor suction means includes a suction throttle passage provided at the exhaust passage for exhibiting venturi suction effects by the exhaust gas flowing through the exhaust passage, and a suction communication passage establishing communication between a vapor phase space in the emitted liquid purge-processing portion and the suction throttle passage.

According to another aspect of the exhaust emission control system of the present invention, the suction communication passage serves as a liquid phase drain passage which drains the liquid phase emission to the emitted liquid purge-processing portion via the liquid phase outlet.

According to another aspect of the exhaust emission control system of the present invention, the suction communication passage corresponds to a path which is provided separately from a liquid phase drain passage which drains the liquid phase emission to the emitted liquid purge-processing portion via the liquid phase outlet.

According to another aspect of the exhaust emission control system of the present invention, the vapor suction means includes a suction fan.

According to another aspect of the present invention, an engine-driven air conditioning system, includes a compressor compressing or sucking a refrigerant for executing a refrigeration cycle at an air conditioning circuit, an engine actuating the compressor, and an exhaust emission control system according to any preceding claims for purging an exhaust gas emitted from the engine.

According to the present invention, the vapor suction means sucks the vapor existing in the space within the emitted liquid purge-processing portion to supply the vapor to the separating portion main body of the vapor-liquid separating portion. Thus, it is restrained that the exhaust gas remains in the emitted liquid purge-processing portion. Namely, the possibilities that the exhaust gas remained within the emitted liquid purge-processing portion is condensed at the outside of the emitted liquid purge-processing portion to generate the condensate water is restrained.

### BRIEF DESCRIPTION OF THE DRAWINGS

The foregoing and additional features and characteristics of the present invention will become more apparent from the following detailed description considered with reference to the accompanying drawings, wherein:

Fig. 1 is a schematic view of a vapor-liquid separating system for an engine-driven air conditioning system according to a first embodiment of the present invention.

Fig. 2 is a plan view schematically showing a main portion of the vapor-liquid separating system for the engine-driven air conditioning system according to the first embodiment of the present invention.

Fig. 3 is a schematic view of a vapor-liquid separating system for an engine-driven air conditioning system according to a second embodiment of the present invention.

Fig. 4 is a schematic view of a vapor-liquid separating system for an engine-driven air conditioning system according to a third embodiment of the present invention.

Fig. 5 is a schematic view of a vapor-liquid separating system for an engine-driven air conditioning system according to a fourth embodiment of the present invention.

Fig. 6 is a schematic view of an engine-driven air conditioning system according to a fifth embodiment of the present invention.

### DETAILED DESCRIPTION

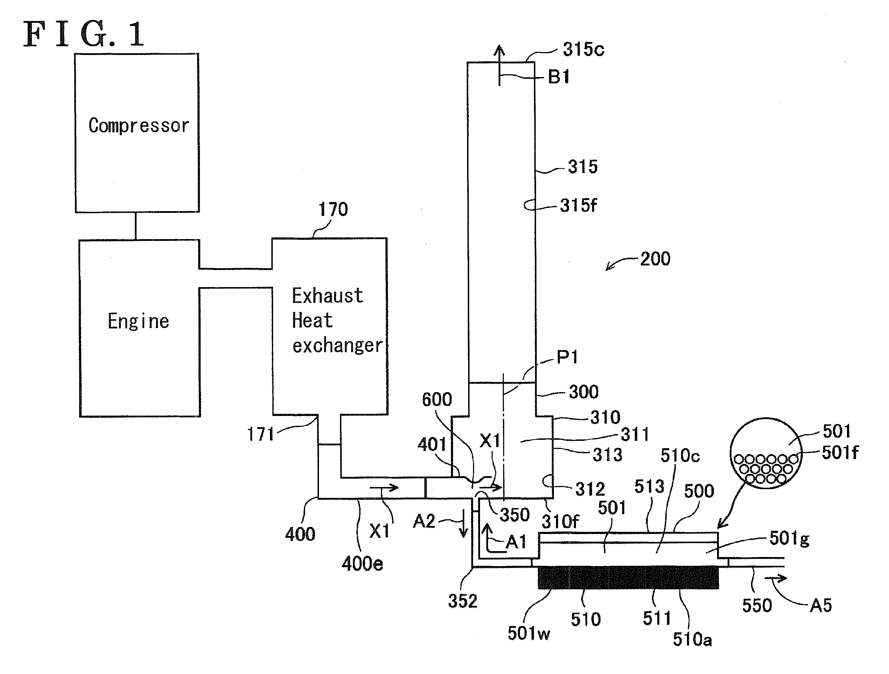

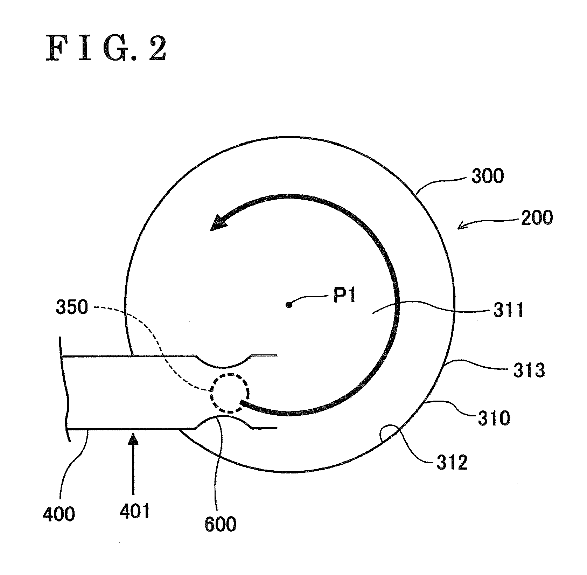

Embodiments of the present invention will be explained with reference to illustrations of Figs. 1-2 as follows.

As shown in Fig. 1, an engine-driven air conditioning system according to a first embodiment includes a compressor which compresses and sucks refrigerants in order to execute refrigeration cycle at an air conditioning circuit, and an engine serving as a source of generating exhaust gases and a driving source for the air conditioning circuit which drives the compressor. The air conditioning system includes a vapor-liquid separating device 200. As depicted in Fig. 1, the vapor-liquid separating device 200 includes a vapor-liquid separating portion 300, an exhaust passage 400 and an emitted liquid purge-processing portion 500.

The vapor-liquid separating portion 300 which is a primary element of the vapor-liquid separating device 200 serves as an exhaust gas processing portion. The vapor-liquid separating portion 300 includes a separating portion main body 310 which separates a vapor phase and a liquid phase included in the exhaust gases of the engine, and a drain water outlet 350 serving as a liquid phase outlet which discharges the liquid phase of the exhaust gas separated in the separating portion main body 310 as drain water. The separating portion main body 310 includes a cylinder body 313 forming a chamber 311, and an exhaust pipe 315 which extends upward from the cylinder body 313 so as to be in fluid communication with the atmosphere. The chamber 311 of the cylinder body 313 is defined by a wall surface 312 which imparts a helical movement on the exhaust gas about an axis P1 to accelerate, or promote the exhaust gases to be separated into the vapor phase and the liquid phase. The drain water outlet 350 serving as a drain outlet which discharges the liquid phase separated from the vapor phase of the exhaust gas as drain water is positioned within the chamber 311 of the separating portion main body 310. More particularly, the drain water outlet 350 is formed at a lowermost portion or close to the lowermost portion of a bottom portion of the chamber 311.

The exhaust passage 400 connects an exhaust heat exchanger 170 provided at an engine side and the vapor-liquid separating portion 300. The exhaust heat exchanger 170 is configured to promote high-temperature exhaust gases emitted from an exhaust port of the engine to exchange the heat with heat exchange medium (i.e., generally, coolant) to cool, or refrigerate the exhaust gases, thereby the exhaust gases assume to be likely generating condensate water.

The exhaust passage 400 connects an exhaust port 171 of the exhaust heat exchanger 170 and the vapor-liquid separating portion 300, so that the exhaust gases emitted from the exhaust heat exchanger 170 at the engine side is supplied to the chamber 311 of the separating portion main body 310 of the vapor-liquid separating portion 300 so as to be separated into the vapor phase and the liquid phase.

The emitted liquid purge-processing portion 500 is in fluid communication with the chamber 311 of the separating portion main body 310 provided at the vapor-liquid separating portion 300 via the drain water outlet 350 provided at the vapor-liquid separating portion 300. The emitted liquid purge-processing portion 500 is arranged at downward position relative to the drain water outlet 350 of the vapor-liquid separating portion 300, which corresponds to direction of gravitational force, so as to utilize downward flow nature of drain water by the gravitational force. The drain water outlet 350 (i.e., liquid phase outlet) of the vapor-liquid separating portion 300 is in fluid communication with the emitted liquid purge-processing portion 500 via a drain passage 352 (i.e., a liquid phase drain passage; also serving as a vapor suction means

The emitted liquid purge-processing portion 500 includes a container 510 having a contamination removing material accommodating chamber 501 accommodating contamination removing material (e.g., neutralizer) 501f, and a drain pipe 550 which establishes communication between the contamination removing material accommodating chamber 501 and the outside. The container 510 includes a liquid phase space 510a in which emitted liquid is reserved and a vapor-phase space 510c in which vapor is reserved. The drain pipe 550 serves as a second drain passage (i.e., liquid phase drain passage) which drains emitted liquid (liquid phase) in the container 510, and is in fluid communication with the vapor-phase space 510c. The drainpipe 550 may be configured to be in fluid communication with the liquid phase space 510a. In those circumstances, it is preferable to ensure a predetermined volume of the liquid phase space 510a in order to purge, or remove the contamination of the emitted liquid (liquid phase emission).

The container 510 includes a container main body 511 which forms the contamination removing material accommodating chamber 501 and a cover 513 which is detachably provided at the container main body 511 for covering a top opening thereof. The emitted liquid purge-processing portion 500 reserves drain water, which is emitted liquid (liquid phase emission) drained from the drain water outlet 350, to perform purging processing (e.g., neutralization treatment) by the contamination removing material 501f (e.g., neutralizer) to the drain water (liquid phase emission). Liquid phase emission 501w (drain water) which has been processed with the purging, or removing of the contamination by the contamination removing material 501f is drained from the drain pipe 550 to the outside of the emitted liquid purge-processing portion 500. The emitted liquid purge-processing portion 500 is in fluid communication with the ambient (atmosphere) via the drainpipe 550.

When the engine-driven air conditioning system is driven, the engine is driven by gas fuel or liquid fuel to actuate a compressor for air conditioning. By the actuation of the compressor, the refrigerant is compressed or sucked at the air conditioning circuit to execute the refrigeration cycle. When the refrigeration cycle is executed, the engine generates exhaust gases with high temperature. The high-temperature exhaust gas emitted from the engine is cooled (refrigerated) at the exhaust heat exchanger 170, then is flowed through the exhaust passage 400 in an arrowed direction X1 to the separating portion main body 310 of the vapor-liquid separating portion 300. The exhaust gas supplied to the separating portion main body 310 hits the wall surface 312 of the cylinder body 313 of the separating portion main body 310, thereby helically moving about the axis P1 of the cylinder body 313. Consequently, the separation of the exhaust gas into the vapor phase and the liquid phase is promoted.

The exhaust gas from which the liquid phase is excluded rises upward in the exhaust pipe 315 (i.e., having a chimney structure), and emitted to the outside via a top opening 315c of the exhaust pipe 315 in an arrowed direction B1. The exhaust gas cooled during rising in the exhaust pipe 315 may generate condensate water. The condensate water flows downward along a inner wall surface 315f of the exhaust pipe 315 by the gravitational force, and is eventually drains towards the emitted liquid purge-processing portion 500 via the drain water outlet 350 and the drain passage (i.e., liquid phase drain passage) 352. An inner diameter of the exhaust pipe 315 is set to be relatively large for the purpose of declining the flow velocity of the exhaust gas flowing therein.

The separated liquid phase emission is reserved at a bottom surface 310f of the separating portion main body 310 as drain water (emitted liquid). Further, the drain water (emitted liquid) is drained from the drain water outlet 350 towards the vapor-phase space 510c of the emitted liquid purge-processing portion 500 via the drain passage 352 in an arrowed direction A2 by the gravitational force so as to be reserved in the contamination removing material accommodating chamber 501 of the emitted liquid purge-processing portion 500. The drain water pooled in the contamination removing material accommodating chamber 501 is purged, or removed of the contamination (e.g., neutralized) by the contamination removing material (e.g., neutralizer) 501f provided therein. The depurated drain water is emitted outside of the contamination removing material accommodating chamber 501 via the drainpipe 550. Accordingly, the environmental contamination by the contaminated drain water is prevented.

As shown in Fig. 1, according to the first embodiment, a suction throttle passage 600 serving as a vapor suction means is provided at an end portion 401 of the exhaust passage 400 closer to the vapor-liquid separating portion 300. More particularly, the exhaust passage 400 includes the suction throttle passage 600 which exhibits venturi suction effect which increments flow velocity of the exhaust gas flowing in the exhaust passage 400. The suction throttle passage 600 is positioned at the bottom side in the chamber 311 of the separating portion main body 310 so as to face the drain water outlet 350. The suction throttle passage 600 is in fluid communication with the vapor-phase space 510c in the emitted liquid purge-processing portion 500 via the drain water outlet 350 and is in fluid communication with the cylinder body 313. The suction throttle passage 600 is positioned above the drain water outlet 350.

The exhaust gas emitted from the exhaust port of the engine flows in the exhaust heat exchanger 170, and then in the exhaust passage 400. Further, the exhaust gas flows in the suction throttle passage 600 provided at the end of the exhaust passage 400, thereby increasing the flow velocity thereof. Thereafter, the exhaust gas further flows to the chamber 311 of the separating portion main body 310 in the arrowed direction X1 to hit the wall surface 312 so as to move helically. In consequence, the separation of the vapor phase and the liquid phase of the exhaust gas is promoted.

In those circumstance, cross-sectional area of the suction throttle passage 600 is reduced relative to the cross-sectional area of other portions 400e of the exhaust passage 400. Thus, the flow velocity of the exhaust gas flowing in the suction throttle passage 600 is increased. In those circumstances, the suction throttle passage 600 exhibits venturi suction effects by reducing the pressure of the exhaust gas. Accordingly, vapor 501g existing in the vapor-phase space 510c in the container 510 of the emitted liquid purge-processing portion 500 is sucked in a sucking direction (i.e., an arrowed direction A1) towards the suction throttle passage 600 via the drain passage 352 and the drain water outlet 350. The sucked vapor 501g is supplied to the chamber 311 at the separating portion main body 310 of the vapor-liquid separating portion 300 along with the exhaust gas flowing in the exhaust passage 400 so as to move helically in the chamber 311. As explained above, the gas (e.g., exhaust gas) existing in the space in the container 510 of the emitted liquid purge-processing portion 500 is sucked towards the suction throttle passage 600 in the arrowed direction A1, thereby being supplied to the chamber 311.

The liquid phase emission separated from the vapor phase of the exhaust gas flows downward by the gravitational force towards the emitted liquid purge-processing portion 500 as drain water from the drain water outlet 350 via the drain passage 352. The venturi suction effect of the suction throttle passage 600 is set not to interfere the downward flow of the drain water in the drain passage 352. Because the drain water is liquid phase and the specific gravity of the liquid is greater than the vapor, the drain water is unlikely sucked. That is, only vapor among the fluid including the vapor and the liquid is sucked in the arrowed direction A1 towards the suction throttle passage 600 by the venturi suction effects of the suction throttle passage 600, so that purged drain water (emitted liquid which had purging process or contamination removing process) can be emitted to the outside via the drain pipe 550 in an arrowed direction A5.

According to the first embodiment of the present invention, even if the exhaust gas is existing within the emitted liquid purge-processing portion 500, the exhaust gas in the emitted liquid purge-processing portion 500 is sucked in the suction direction (i.e., arrowed direction A1) to be sent to the spearing portion main body 310 of the vapor-liquid separating portion 300. The exhaust gas is restrained from being remained in the emitted liquid purge-processing portion 500. Thus, according to the first embodiment of the present invention, the exhaust gas remained in the emitted liquid purge-processing portion 500 is restrained from flowing to the outside of the emitted liquid purge-processing portion 500. In consequence, the possibilities of generating the condensate water with the exhaust gas condensed outside the emitted liquid purge-processing portion 500 is restrained. Because the condensate water generated outside the emitted liquid purge-processing portion 500 is not sufficiently in contact with the contamination removing material 501f, purification thereof is not adequate. With the construction of the first embodiment of the present invention, sealing elements (e.g., gasket, water sealing, or the like) between the container main body 511 and the cover 513 may be eliminated or simplified. Accordingly, the exhaust gas in the exhaust passage 400 is restrained from being flowed into the emitted liquid purge-processing portion 500.

Further, according to the first embodiment of the present invention, the suction throttle passage 600 is positioned within the chamber 311 at the separating portion main body 310 of the vapor-liquid separating portion 300 while being provided at the end portion of the exhaust passage 400. Thus, when the exhaust gas flows in the suction throttle passage 600 at the end portion of the exhaust passage 400, the flow velocity is increased while generating the venturi suction effects. The exhaust gas having incremented flow velocity hits the wall surface 312 of the chamber 311 of the separating portion main body 310 of the vapor-liquid separating portion 300. Accordingly, the separation efficiency of the exhaust gas separating into the vapor and liquid phases at the vapor-liquid separating portion 300 is enhanced.

According to the first embodiment of the present invention, as explained above, the drain water outlet 350 is in fluid communication with the suction throttle passage 600 and the drain passage 352. Thus, the drain water outlet 350 and the drain passage 352 commonly have two functions, which are: draining liquid phase separated from the exhaust gas as drain water to the emitted liquid purge-processing portion 500 in the arrowed direction A2; and compulsorily sucking the vapor remaining in the vapor phase space 510c of the emitted liquid purge-processing portion 500 towards the vapor-liquid separating portion 300 in the arrowed direction A1 (i.e., reverse direction from the arrowed direction A2). Accordingly, the drain water outlet 350 and the drain passage 352 have both drain water draining function and vapor suction function. According to the foregoing construction, a suction pipe for exclusive use for sucking the vapor in the emitted liquid purge-processing portion 500 towards the vapor-liquid separating portion 300 can be eliminated, and thus is advantageous for reducing the number of parts and downsizing the system per se.

In a case where an air conditioning load at the air conditioning circuit is increased, because the engine rotation speed is incremented and thereby the flow volume of the exhaust gas in the exhaust passage 400 per unit of time is increased, a risk that the exhaust gas flows within the emitted liquid purge-processing portion 500 is increased. According to the construction of the first embodiment of the present invention, even if the flow volume of the exhaust gas per unit of time is increased by the increase of the engine rotation speed because of the increase of the air conditioning load at the air conditioning circuit, the venturi suction effects by the suction throttle passage 600 is increased, so that the exhaust gas flowing in the emitted liquid purge-processing portion 500 can be effectively sucked towards the suction throttle passage 600 via the drain water outlet 350.

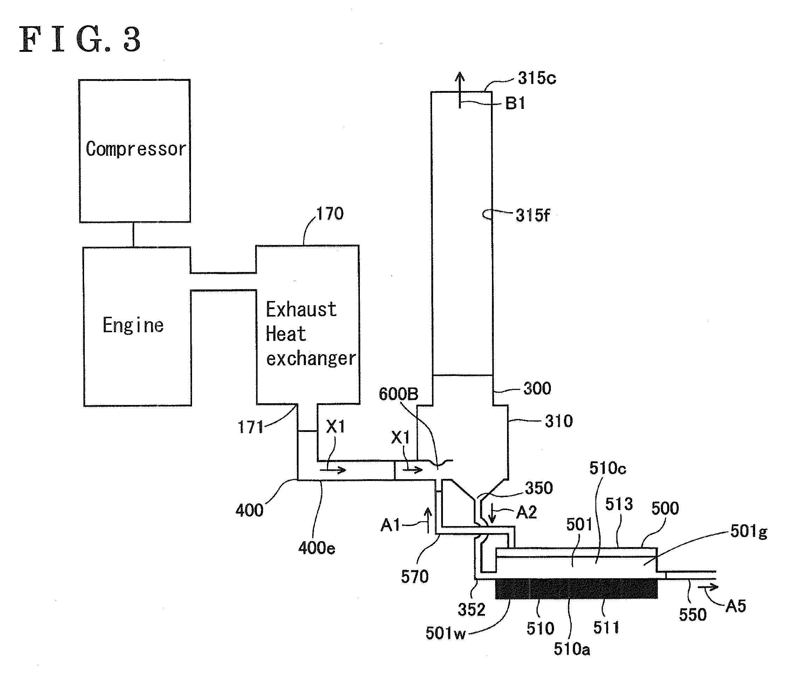

A second embodiment of the present invention will be explained referring to Fig. 3 as follows. Basic construction of the second embodiment is identical to the first embodiment, and substantially the same advantages are attained. Constructions different from the first embodiment will be explained as follows. As shown in Fig. 3, a suction throttle passage 600B (i.e., serving as a vapor suction means) is in fluid communication with the emitted liquid purge-processing portion 500 via a suction communication passage (i.e. serving as a vapor suction means) The exhaust gas emitted from the engine flows to the separating portion main body 310 of the vapor-liquid separating portion 300 through the suction throttle passage 600B in the arrowed direction X1. In those circumstances, the suction throttle passage 600B exhibits the venturi suction effects by the exhaust gas flowing in the depressurized suction throttle passage 600B. In consequence, the vapor 501g existing in the vapor phase 510c in the container 510 of the emitted liquid purge-processing portion 500 is sucked in a sucking direction (i.e., arrowed direction A1) via the suction communication passage 570 so as to be supplied to the chamber 311 of the separating portion main body 310 of the vapor-liquid separating portion 300 together with the exhaust gas flowing in the exhaust passage 400. As shown in Fig. 3, the suction communication passage 570 is not directly connected to the drain water outlet 350, and is arranged to be in parallel with the drain water outlet 350 and the drain passage 352. Accordingly, even when the venturi suction effects by the suction throttle passage 600B is significant, the drain water (liquid phase) flowing downward through the drain passage 352 is restrained from being sucked in the arrowed direction A2 towards the suction throttle passage 600B. The drain water outlet 350 is formed at a bottom portion of the separating portion main body 310.

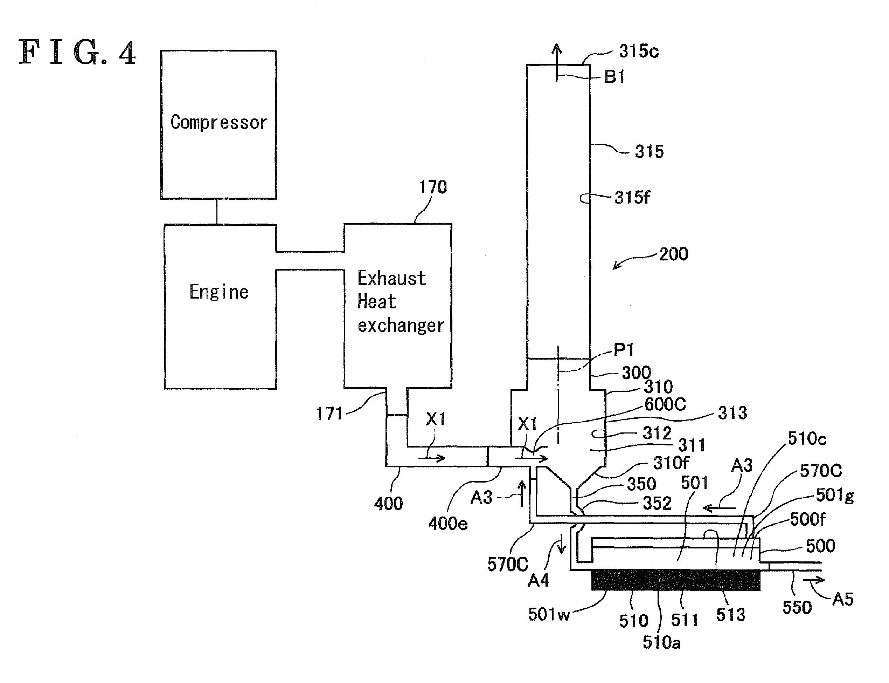

A third embodiment will be explained with reference to Fig. 4. The basic constructions of the third embodiment are identical to the constructions of the second embodiment, and the advantages of the third embodiment are substantially the same with the second embodiment. Constructions different from the second embodiment will be explained as follows. As shown in Fig. 4, a suction throttle passage (i.e., serving as a vapor suction means) 600C is not directly connected to the drain water outlet 350 and the drain passage 352, and is in fluid communication with a space 500f in the vapor phase space 510c of emitted liquid purge-processing portion 500 closer to the drainpipe 550 via a suction communication passage (i.e., serving as a vapor suction means) 570C. In consequence, the vapor existing in the space 500f closer to the drainpipe 550 in the space within the container 510 of the emitted liquid purge-processing portion 500 is sucked in a sucking direction (arrowed direction A3), and is supplied to the chamber 311 of the separating portion main body 310 of the vapor-liquid separating portion 300 in the arrowed direction X1 together with the exhaust gas flowing in the exhaust passage 400. Accordingly, the exhaust gas remained in the space 500f in the container 510 of the emitted liquid purge-processing portion 500 is restrained from being drained to the outside via the drainpipe 550.

As shown in Fig. 4, the suction communication passage 570C sucked by venturi suction effects is not directly connected to the drain water outlet 350 and the drain passage 352. The suction communication passage 570C is arranged in parallel to the drain passage 352. Accordingly, even when the venturi suction effects by the suction throttle passage 600C is intensive, the drain water (liquid phase) flowing downward through the drain passage 352 is restrained from being sucked in a reverse direction, that is, towards the emitted liquid purge-processing portion 500 in an arrowed direction A4 in Fig. 4.

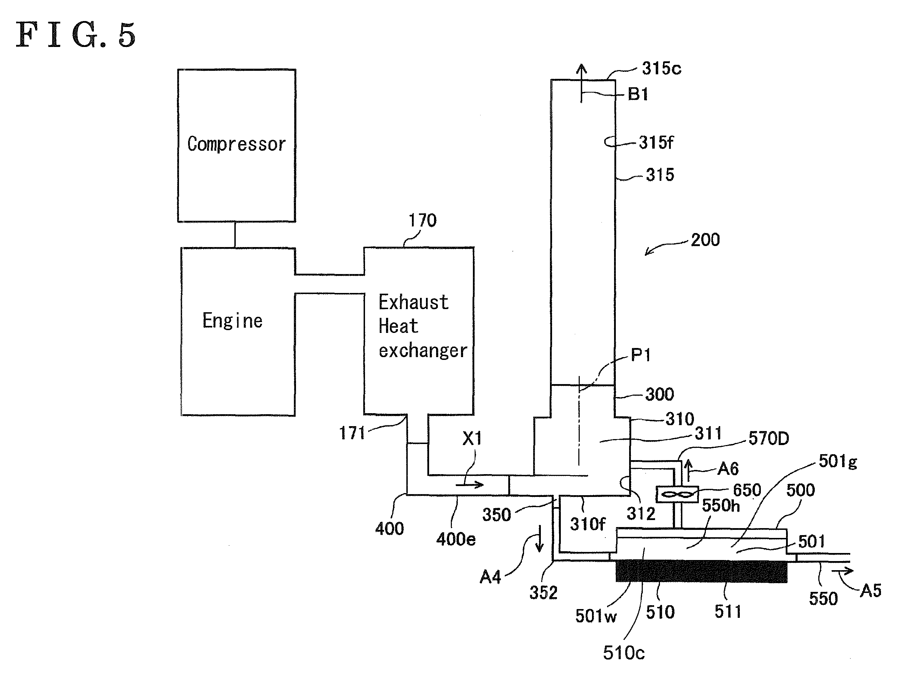

A fourth embodiment of the present invention will be explained with reference to Fig. 5. Basic constructions of the fourth embodiment are substantially the same with the constructions of the first embodiment, and the fourth embodiment exhibits substantially the same advantages with the first embodiment. Constructions different from the first embodiment will be explained as follows. As shown in Fig. 5, a suction communication passage (i.e., serving as a vapor suction means) 570D establishes the communication between the vapor phase space 510c of the container 510 of the emitted liquid purge-processing portion 500 and the chamber 311 of the separating portion main body 310. A suction fan 650 serving as a vapor suction means is provided at the suction communication passage 570D. As a result, the vapor existing in a space portion 550h closer to the drain pipe 550 among the vapor phase space 510c of the container 510 of the emitted liquid purge-processing portion 500 is intensively sucked in the sucking direction (i.e., an arrowed direction A6) by the actuation of the suction fan 650, and is thereby supplied to the chamber 311 of the separating portion main body 310 of the vapor-liquid separating portion 300. Accordingly, the emission of the exhaust gas remained in the space 550h within the container 510 of the emitted liquid purge-processing portion 500 to the outside via the drain pipe 550 is effectively restrained. The space in the container 510 of the emitted liquid purge-processing portion 500 closer to the drain pipe 550 relative to the drain passage 352 connected to the drain water outlet 350 (i.e., liquid phase outlet) is defined as the space 550h.

As shown in Fig. 5, the suction communication passage 570D is not directly connected to the drain water outlet 350 and the drain passage 352, and is arranged in parallel to the drain passage 352. According to the foregoing construction, even when the suction force of the suction fan 650 is intensive, the drain water flowing downward by the gravitational force is restrained from being sucked in a reverse direction, that is, in the arrowed direction A4 through the drain passage 352.

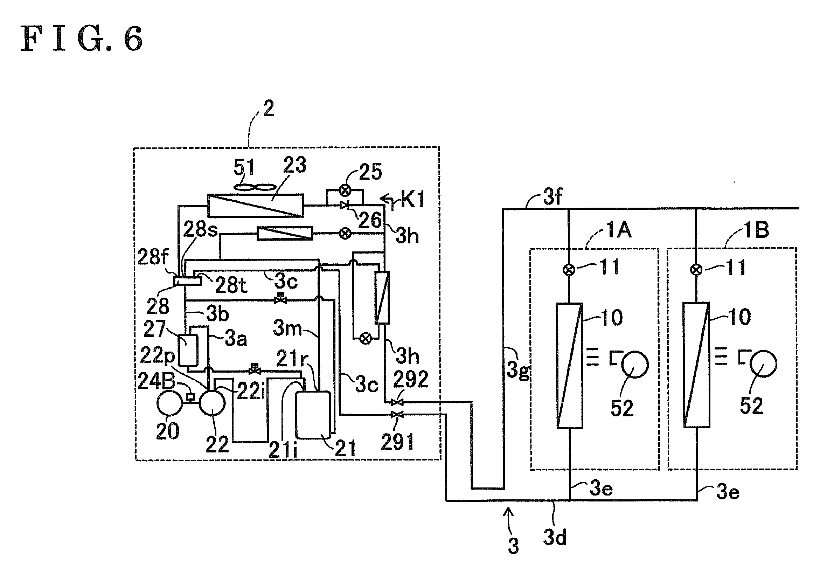

A fifth embodiment of the present invention will be explained with reference to Fig. 6. Basic constructions of the fifth embodiment is identical to other embodiments mentioned above except for the points explained herein below. The fifth embodiment includes substantially the same advantages with other above-described embodiments. Constructions of the fifth embodiment different from other embodiments will be explained as follows. Fig. 6 shows a schematic view of an air conditioning circuit. The air conditioning circuit includes plural indoor units 1A, 1B which conducts air conditioning in a room, an outdoor unit 2 which controls refrigerant performing the air conditioning, and a refrigerant circuit system 3 which connects the outdoor unit 2 and each of the indoor unit 1A, 1B. For the explanatory purpose, a single outdoor unit 2 and two indoor units 1A, 1B are provided in the embodiment. However, the number of the outdoor unit and the indoor unit is not limited to the described example. For example, a single indoor unit may be provided for a single outdoor unit, or plural outdoor units may be provided.

As shown in Fig. 6, the indoor unit 1A, 1B positioned indoor includes an indoor heat exchanger 10 which exchanges the heat between the refrigerant and the room air for air conditioning, and an expansion valve 11 (i.e., opening degree thereof is fixed) which expands the refrigerant. The number of indoor units can be variable, according to the embodiment of the present invention, the indoor units are represented by the indoor units 1A, 1B.

The outdoor unit 2 is positioned outdoor. The outdoor unit 2 includes an engine 20 (driving source) formed with gas engine, an accumulator 21 which accommodates refrigerants in a state where vapor refrigerant and liquid refrigerant are separated, a compressor 22 (compressing portion) which is actuated to suck vapor refrigerant from the accumulator 21 to be compressed therein in response to the actuation of the engine 20, and an outdoor heat exchanger 23 which performs the heat exchange for air conditioning. The rotation speed of the engine 20 is detected by a sensor 24B. The compressor 22 is interlocked with the engine 20 via a power transmitting member such as a timing belt. Namely, the engine 20 serves as a driving source for the compressor 22. The compressor 22 includes a suction port 22i which sucks vapor refrigerant into a compression chamber from the accumulator 21 and an outlet port 22p which discharges the high-pressurized vapor refrigerant which is compressed in the compression chamber.

As explained hereinbelow, an electronic regulating valve 25 serving as a control valve (expansion valve) and a check valve 26 are arranged in parallel to each other at upstream of the outdoor heat exchanger 23 in a returning direction of the refrigerant (i.e., an arrowed direction K1) where the refrigerant returns from the indoor units 1A, 1B to the outdoor unit 2 at a heating operation. The check value 26 is configured to allow the refrigerant to flow from the outdoor heat exchanger 23 of the outdoor unit 2 to the indoor units 1A, 1B and to block the flow of the refrigerant from the indoor units 1A, 1B to the outdoor heat exchanger 23 of the outdoor unit 2. The electronic regulating valve 25 is configured to adjust an opening degree by an electric control. The electronic regulating valve (main regulating valve) 25 includes a driving portion such as a motor or a solenoid, and a valve portion whose opening degree changes variably by the actuation of the driving portion so as to vary the flow amount. A control portion controls an opening degree of the main regulating valve 25 by controlling driving portion of the main regulating valve 25.

Operations when heating the room will be explained as follows. When the engine 20 is driven by fuel gas, the compressor 22 is actuated, vapor refrigerant in the accumulator 21 is sucked to the compressor 22 via a suction port 21i of the accumulator 21 and the suction port 22i of the compressor 22 to be compressed in the compression chamber of the compressor 22. The compressed vapor refrigerant to have high temperature and high pressure is discharged from the outlet portion 22p of the compressor 22 to an oil separator 27 via a fluid path 3a. Oil is separated from the refrigerant at the oil separator 27. The vapor refrigerant excluded with the oil and having high temperature and high pressure passes a third port 28t of a four-way valve 28, a fluid path 3c, a ball valve 291 and fluid paths 3d, 3e to reach the indoor heat exchanger 10 where the refrigerant exchanges the heat with the room air to be condensed (i.e., liquefied). Because the heat of condensation is emitted to the room, the room air is heated. As explained above, during the heating operation of the indoor units 1A, 1B, the indoor heat exchanger 10 serves as a condenser.

Thereafter, the refrigerant processed with liquefaction through the indoor heat exchanger 10 assumes liquid phase state or dual-phase state including vapor and liquid, reaches the expansion valve 11, and expands at the expansion valve 11 of the indoor unit 1A, 1B to be depressurized. Further, the depressurized refrigerant flows in the arrowed direction K1 via fluid paths 3f, 3g, a ball valve 292, a fluid path 3h, reaches the electronic regulating valve 25, flows through the electronic regulating valve 25, and reaches the outdoor heat exchanger 23. The refrigerant is evaporated at the outdoor heat exchanger 23 to exchange the heat with the ambient air (outside air). As explained above, the outdoor heat exchanger 23 serves as an evaporator 23 during the heating operation of the indoor unit 1A, 1B. In those circumstances, the electronic regulating valve 25 serves as an expansion valve during the heating operation of the indoor unit 1A, 1B to expand the refrigerant. An opening degree of the electronic regulating valve 25 is adjustable.

Further, the refrigerant returns to a return port 21r of the accumulator 21 via a first port 28f, a second port 28s of the four-way valve 28, and a fluid path 3m. The returned refrigerant is reserved in the accumulator 21 in a state where the liquid refrigerant is separated from the gas refrigerant. Further, a first fan 51 which sends air to the outdoor heat exchanger 23 is provided at the outdoor unit 2 and a second fan 52 which sends air to the indoor heat exchanger 10 is provided at the indoor units 1A, 1B.

Operations when cooling the room by the indoor units 1A, 1B will be explained as follows. When the gas engine 20 is driven by the fuel gas, the compressor 22 is actuated, the vapor refrigerant in the accumulator 21 is sucked from the suction port 22i of the compressor 22 to be compressed in the compression chamber of the compressor 22. The vapor refrigerant which is compressed to have high temperature and high pressure is discharged from the outlet port 22i of the compressor 22 to reach the oil separator 27 via the fluid path 3a. The oil is separated from the refrigerant at the oil separator 27. The refrigerant having high temperature and high pressure from which the oil is excluded reaches the outdoor heat exchanger 23 via the first port 28f of the four-way valve 28 serving as a fluid path switching valve. The refrigerant with high temperature and high pressure is refrigerated, or cooled by exchanging the heat with the outside air at the outdoor heat exchanger 23 to be liquefied. The refrigerant which is processed with the liquefaction, or in a process of the liquefaction (i.e., liquid phase state or double-phase state including the vapor and liquid) reaches the expansion valve 11 via the check valve 26, the fluid path 3h, the ball valve 292, and the fluid paths 3g, 3f. And, thus the refrigerant is expanded at the expansion valve 11 to be lower temperature. Generally, during the cooling operation, the electronic regulating valve 25 is fully closed. However, the electronic regulating valve 25 may be opened during the cooling operation.

As explained above, the refrigerant deprived of the heat at the outdoor heat exchanger 23 to have lower temperature passes the fluid paths 3g, 3f, expands at the expansion valve 11 to have low temperature and low pressure, and further reaches the indoor heat exchanger 10 where the refrigerant exchanges the heat with the room air to cool the room air. Further, the refrigerant returns to the return port 21r of the accumulator 21 via the fluid path 3e, the ball valve 291, the fluid path 3c, the third port 28t of the four-way valve 28, the second port 28s of the four-way valve 28, and the fluid path 3m.

The vapor-liquid separating portion 300 according to the embodiments of the present invention uses the centrifugation by the helical movement of the exhaust gas to separate the vapor phase and the liquid phase. However, methods applied to the vapor-liquid separation are not limited to the use of the centrifugation. Other methods may be adopted for separating the vapor phase and liquid phase, for example, generating the condensate water by cooling the exhaust gas, or using a filter, or the like. Further, the neutralizer is applied as the contamination removing material 501f reserved in the contamination removing material accommodating chamber 501 according to the embodiments of the present invention. However, the contamination removing material is not limited to the neutralizer, and other agents may be applied. The air conditioning circuit is not limited to the circuit shown in Fig. 6.

Further, the application of the exhaust emission control system is not limited to the engine-driven air conditioning system, and may be applied to an engine-driven cogeneration system. Engines driven by gas fuel or driven by liquid fuel may be applied. Particular structures and functions of any one of the embodiments are applicable to other embodiments. In other words, particular structures and functions provided at any one of the embodiments and particular structures and functions of other embodiments may be combined.

Thus, according to the embodiments of the present invention, an exhaust emission control system includes an exhaust passage through which an exhaust gas emitted from a drive source, an exhaust gas processing portion connected to the exhaust passage and processing the exhaust gas flowing in the exhaust passage, a liquid phase outlet in fluid communication with the exhaust passage and emitting the liquid phase included in the exhaust gas, an emitted liquid purge-processing portion provided to be in fluid communication with the liquid phase outlet and processing the purge, or removing contamination of the liquid phase emitted from the liquid phase outlet, and a vapor suction means sucking the vapor existing in the space within the emitted liquid purge-processing portion to supply to the exhaust gas processing portion. For example, an internal combustion engine or an external combustion engine may be applied as the drive source. Advantages described in this specification are exhibited according to the foregoing disclosure.

Further, an exhaust emission control system includes an exhaust passage through which an exhaust gas emitted from an exhaust gas generating source flows, an exhaust gas processing portion connected to the exhaust passage and processing the exhaust gas flowing through the exhaust passage, a liquid phase outlet being in fluid communication with the exhaust passage and discharging the liquid phase included in the exhaust gas, an emitted liquid purge-processing portion provided to be in fluid communication with the liquid phase outlet and performing the purge, or contamination removing process to the liquid phase discharged from the liquid phase outlet, and a vapor suction means sucking the vapor existing in the space within the emitted liquid purge-processing portion and supplying to the exhaust gas processing portion. For example, a driving system such as an engine, as the generating source of the exhaust gas, a combustor for burning combustible gas, and a combustor for burning wastes such as garbage or trash may be applied as the exhaust gas generating source. For example, an internal combustion engine or an external combustion engine may be applied as the drive source. Advantages described in this specification are exhibited according to the foregoing disclosure.

According to the embodiment of the present invention, the exhaust emission control system includes the vapor-liquid separating portion 300 including the separating portion main body 310 separating an exhaust gas emitted from the engine into a vapor phase emission and a liquid phase emission, and the drain water outlet (liquid phase outlet) 350 discharging the liquid phase emission separated at the separating portion main body 310, the exhaust passage 400 connecting the engine and the separating portion main body 310 of the vapor-liquid separating portion 300 and supplying the exhaust gas emitted from the engine to the separating portion main body 310 of the vapor-liquid separating portion 300, the emitted liquid purge-processing portion 500 provided to be in fluid communication with the drain water outlet 350 and processing with purge to the liquid phase emission emitted from the drain water outlet 350, and the vapor suction means 600, 600B, 600C, 352, 570, 570C, 570D, 650 sucking the vapor existing in the space within the emitted liquid purge-processing portion 500 to be supplied to the separating portion main body 310 of the vapor-liquid separating portion 300.

According to the subject matter of the exhaust emission control system the vapor suction means 600, 600B, 600C, 352, 570, 570C, 570D includes the suction throttle passage 600, 600B, 600C provided at the exhaust passage 400 for exhibiting venturi suction effects by the exhaust gas flowing through the exhaust passage 400, and the suction communication passage 352, 570, 570C, 570D establishing communication between the vapor phase space 510c in the emitted liquid purge-processing portion 500 and the suction throttle passage 600, 600B, 600C.

According to the subject matter of the exhaust emission control system, the suction communication passage 352 serves as the liquid phase drain passage 352 which drains the liquid phase emission to the emitted liquid purge-processing portion via the liquid phase outlet 350.

According to the subject matter of the exhaust emission control system, the suction communication passage 570, 570C, 570D corresponds to a path 570, 570C, 570D which is provided separately from a liquid phase drain passage 352 which drains the liquid phase emission to the emitted liquid purge-processing portion 500 via the liquid phase outlet 350.

According to the subject matter of the exhaust emission control system, the vapor suction means includes a suction fan 650.

According to the embodiments, an engine-driven air conditioning system includes the compressor 22 compressing or sucking a refrigerant for executing a refrigeration cycle at the air conditioning circuit, the engine 20 actuating the compressor 22, and the exhaust emission control system described above for purging an exhaust gas emitted from the engine 20.

According to the embodiment of the present invention, when the engine is driven, the engine generates an exhaust gas. The exhaust gas emitted from the engine flows through the exhaust passage to the separating portion main body of the vapor-liquid separating portion. The separating portion main body of the vapor-liquid separating portion separates the exhaust gas emitted from the exhaust passage into a vapor phase and a liquid phase. The separated liquid phase is emitted to an emitted liquid purge-processing portion (drain purge processing portion) via a drain outlet (liquid phase outlet). The emitted liquid purge-processing portion (drain purge processing portion) processes the purging processing to the liquid phase (drain) drained from the drain outlet (liquid phase outlet).

There is a possibility that the exhaust gas enters the emitted liquid purge-processing portion (drain purge processing portion). In order to overcome the foregoing drawbacks of the possibilities, the vapor suction means sucks the vapor existing in the space within the emitted liquid purge-processing portion (drain purge processing portion) to supply to the separating portion main body of the vapor liquid separating portion. Accordingly, the exhaust gas is restrained from being remained in the emitted liquid purge-processing portion (drain purge processing portion). Consequently, unlike the known systems, it is restrained that the exhaust gas remaining in the emitted liquid purge-processing portion (drain purge processing portion) condenses at the outside of the emitted liquid purge-processing portion (drain purge processing portion), and thus the possibilities that the exhaust gas generates the condensate water (i.e., which is insufficiently cleansed) are restrained.

The vapor suction means is provided at least one of the exhaust passage and the vapor-liquid separating portion. Namely, the vapor suction means may be provided at the exhaust passage, may be provided at the vapor-liquid separating portion, or may be provided at both of the exhaust passage and the vapor-liquid separating portion.

As the vapor suction means, any devices are applicable as long as sucking the vapor existing in the space within the emitted liquid purge-processing portion (drain purge processing portion) and supplying thereof to the separating portion main body of the vapor-liquid separating portion. The vapor suction means may include a suction throttle passage which is provided at the exhaust passage and exhibits venturi suction effects by the exhaust gas flowing through the exhaust passage. The suction throttle passage may be in fluid communication with the space within the emitted liquid purge-processing portion (drain purge processing portion) via the drain outlet (liquid phase outlet). Further, the suction throttle passage may be in fluid communication with the space within the emitted liquid purge-processing portion (drain purge processing portion) via the suction communication passage. A suction fan or a suction blower, or the like, may also be adopted as the vapor suction means.

## Claims

1. An exhaust emission control system, comprising:
a vapor-liquid separating portion (300) including a separating portion main body (310) separating an exhaust gas emitted from an engine into a vapor phase emission and a liquid phase emission, and a liquid phase outlet (350) discharging the liquid phase emission separated at the separating portion main body (310);
an exhaust passage (400) connecting the engine and the separating portion main body (310) of the vapor-liquid separating portion (300) and supplying the exhaust gas emitted from the engine to the separating portion main body (310) of the vapor-liquid separating portion (300);
an emitted liquid purge-processing portion (500) provided to be in fluid communication with the liquid phase outlet (350) and processing with purge to the liquid phase emission emitted from the liquid phase outlet (350); and
a vapor suction means (600, 600B, 600C, 352, 570, 570C, 570D, 650) sucking the vapor existing in a space within the emitted liquid purge-processing portion (500) to be supplied to the separating portion main body (310) of the vapor-liquid separating portion (300).

2. An exhaust emission control system, according to Claim 1, wherein the vapor suction means (600, 600B, 600C, 352, 570, 570C, 570D) comprises:
a suction throttle passage (600, 600B, 600C) provided at the exhaust passage (400) for exhibiting venturi suction effects by the exhaust gas flowing through the exhaust passage (400), and a suction communication passage (352, 570, 570C, 570D) establishing communication between a vapor phase space (510c) in the emitted liquid purge-processing portion (500) and the suction throttle passage (600, 600B, 600C).

3. An exhaust emission control system, according to Claim 2, wherein the suction communication passage (352) serves as a liquid phase drain passage (352) which drains the liquid phase emission to the emitted liquid purge-processing portion via the liquid phase outlet (350).

4. An exhaust emission control system, according to Claim 2, wherein the suction communication passage (570, 570C, 570D) corresponds to a path (570, 570C, 570D) which is provided separately from a liquid phase drain passage (352) which drains the liquid phase emission to the emitted liquid purge-processing portion (500) via the liquid phase outlet (350).

5. An exhaust emission control system, according to Claim 1, wherein the vapor suction means includes a suction fan (650).

6. An engine-driven air conditioning system, comprising:
a compressor (22) compressing or sucking a refrigerant for executing a refrigeration cycle at an air conditioning circuit;
an engine (20) actuating the compressor (22); and
an exhaust emission control system according to any preceding claims for purging an exhaust gas emitted from the engine (20).
